# EUROPEAN PATENT APPLICATION

(11) **EP 2 194 712 A1**
(43) Date of publication of application: **09.06.2010**
(21) Application number: 09014965.9
(22) Date of filing: 02.12.2009
(51) Int. Cl.: H04N 5/76, G11B 15/02

(54) **Reserved recording method and apparatus of broadcast program**

(30) Priority: 04.12.2008 KR 20080122312
(71) Applicant: Humax Co., Ltd., Seongnam-si, Gyeonggi-do 463-825 (KR)
(72) Inventor: Cho, Min Haeng, Suji-gu, Yongin-si, Gyeonggi-do 448-160 (KR); Jang, Do Young, Dongan-gu, Anyang-si, Gyeonggi-do, 431-797 (KR)
(74) Representative: TER MEER - STEINMEISTER & PARTNER GbR

(57) **Abstract**

A reserved recording method and apparatus of broadcast programs are disclosed. In setting reserved recording for broadcast programs, a start complementary time (SCT) and/or an end complementary time (ECT) are additionally set before a start time and after an end time of the broadcast programs, and if the SCT or a start time of a second broadcast program is ahead of the ECT of a first broadcast program, a switching time from the recording of the first broadcast program to the recording of the second broadcast program can be changed. Thus, a failure to record a portion of a broadcast program previously reserved for recording due to a delay in a broadcast time or the like can be prevented.

## Description

This nonprovisional application claims priority under Article 87 EPC on Patent Application No. 10-2008-0122312 filed in Republic of Korea on December 4, 2008 the entire contents of which are hereby incorporated by reference.

### BACKGROUND

### Field

This document relates to a reserved recording method and apparatus of broadcast programs.

### Related Art

A digital television (D-TV), a set-top box (STB), and the like, that receive the entirety or a portion of a terrestrial digital broadcast, a satellite wave digital broadcast, a cable digital broadcast, and the like, have widely spread and commonly used. Also, recently, Internet protocol (IP) broadcasting that provides various contents and broadcast programs via the Internet is being commercialized. In line with this, broadcast recording devices, such as a PVR-STB (Personal Video Recording - Set Top Box) and the like, that receive a digital broadcast or an IP broadcast and record the same in a storage such as a hard disk drive (HDD) or a flash memory have been released.

Most broadcast recording devices have a reserved recording function. That is, the broadcast recording device outputs electronics program guide (EPG) information, broadcast program guide information, to display it on a TV screen according to a user request, and when the user designates a desired broadcast program and sets reserved recording for the broadcast program by using the EPG information, the broadcast recording device stores a start time and an end time of the broadcast program, a broadcast channel, the title of the broadcast program, and the like, as information for the reserved recording.

Also, the broadcast recording device compares a current time counted by a timer or the like with a broadcast program start time managed as the reserved recording information, automatically starts a recording operation when the current time and the broadcast program start time are consistent, and automatically stops the recording operation when the broadcast program end time arrives.

However, because the broadcast recording device performs the reserved recording operation based on the broadcast program start time and the broadcast program end time managed as the reserved recording information, if, for example, the corresponding broadcast program is delayed in its broadcasting due to a certain reason of a broadcast station or the like, a problem arises in that a later portion of the broadcast program is not recorded.

Thus, in an effort to solve this problem, in the recently released broadcast recording device, an additional start record duration (e.g., five minutes) and an additional end record duration (e.g., five minutes) are set before the start time and after the end time of the reserved recording broadcast program. That is, a recording operation first starts prior to the corresponding broadcast program and the recording operation is still performed even after the corresponding broadcast program is terminated, to thereby entirely record the corresponding broadcast program even if the broadcast program is broadcast before its scheduled time or even if broadcasting of the broadcast program is delayed.

In this case, however, if reserved recording operations are performed with respect to two broadcast programs, namely, first and second broadcast programs, whose broadcast time is close to each other, an end complementary time of the first broadcast program and a start complementary time of the second broadcast program would possibly overlap or the end complementary time of the first broadcast program and a start time of the second broadcast program would possibly overlap. In this respect, a solution to adjustment of a switching time at which switching is performed from the recording operation of the first broadcast program to the recording operation of the second broadcast program has not been proposed yet.

### SUMMARY

An aspect of this document is to provide a method for properly performing reserved recordings for two broadcast programs whose broadcast time is closed to each other.

In an aspect, a method of performing reserved recording for a broadcast program, comprises: additionally setting a start complementary time (SCT) and/or an end complementary time (ECT) before a start time and after an end time of at least one of broadcast programs in setting reserved recording for the broadcast programs; and if the SCT of a second broadcast program or a start time of the second broadcast program is ahead of the ECT of a first broadcast program, changing a switching time for switching from recording of the first broadcast program to recording of the second broadcast program.

In another aspect, a broadcast recording device comprises a receiving unit configured to receive a broadcast program; a recording unit configured to record the broadcast program in a recording medium; and a controller configured to control the receiving unit and the recording unit to perform reserved recording for a broadcast program, wherein the controller is configured to additionally set an SCT and/or an ECT before a start time and after an end time of at least one of broadcast programs in setting reserved recording for the broadcast programs, and if the SCT of a second broadcast program or a start time of the second broadcast program is ahead of the ECT of a first broadcast program, the controller is configured to change a switching time for switching from recording of the first broadcast program to recording of the second broadcast program.

An interval between the ECT and the end time may be lengthier than that between the SCT and the start time.

The switching time may be changed by changing at least one of the ECT of the first broadcast program and the SCT of the second broadcast program.

If the ECT of the first broadcast program is behind the SCT of the second broadcast program and ahead of the start time of the second broadcast program, the switching time may be determined as a certain time between the SCT of the second broadcast program and the ECT of the first broadcast program. In this case, the switching time may be determined as the ECT of the first broadcast program or may be determined as a time closer to the ECT of the first broadcast program than to the SCT of the second broadcast program, and in this case, the position of the switching time may be determined to be varied according to the type of the first broadcast program.

If the ECT of the first broadcast program is the same as or behind the start time of the second broadcast program, the switching time may be determined as a certain time between an end time of the first broadcast program and a start time of the second broadcast program, and in this case, the switching time may be determined as an intermediate time between the end time of the first broadcast program and the start time of the second broadcast program or may be determined as a time closer to the start time of the second broadcast program than to the end time of the first broadcast program.

Accordingly, a failure of recording a portion of a broadcast program which has been reserved for recording due to a broadcast time delay or the like can be prevented.

### BRIEF DESCRIPTION OF THE DRAWINGS

The implementation of this document will be described in detail with reference to the following drawings in which like numerals refer to like elements.

FIG. 1 illustrates a broadcast recording device to which this document is applied.

FIG. 2 illustrates the configuration of the broadcast recording device according to an exemplary embodiment of the present invention.

FIG. 3 illustrates variably setting additional start record duration and an additional end record duration according to an exemplary embodiment of the present invention.

FIG. 4 illustrates a user interface (UI) screen image displayed according to an exemplary embodiment of the present invention.

FIG. 5 illustrates a reserved recording method of a broadcast program according to a first exemplary embodiment of the present invention.

FIG. 6 illustrates a reserved recording method of a broadcast program according to a second exemplary embodiment of the present invention.

FIG. 7 illustrates a reserved recording method of a broadcast program according to a third exemplary embodiment of the present invention.

FIG. 8 illustrates a reserved recording method of a broadcast program according to a fourth exemplary embodiment of the present invention.

### DETAILED DESCRIPTION

Hereinafter, a reserved recording method and apparatus of a broadcast program according to an implementation of this document will be described in detail with reference to the attached drawings.

First, the present invention can be applicable to various types of broadcast recording devices having a reserved recording function to receive a digital broadcast or an IP broadcast and record the same in a storage medium such as a hard disk drive (HDD), a flash memory, and the like.

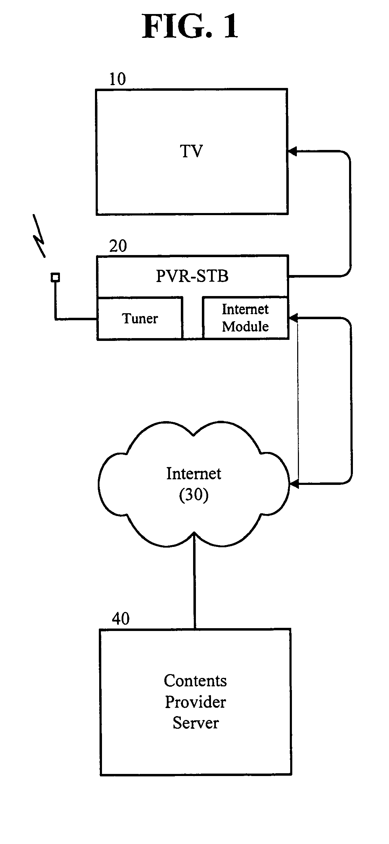

As show in FIG. 1, a broadcast recording device 20, e.g., a PVR-STB, to which the present invention is applicable, may include a tuner for receiving a digital broadcast and/or an Internet module for receiving an IP broadcast.

The broadcast recording device 20 such as the PVR-STB may be used by being connected with a television (TV) 10 and may perform bi-directional communication with a contents provider server 40 connected via the Internet 30.

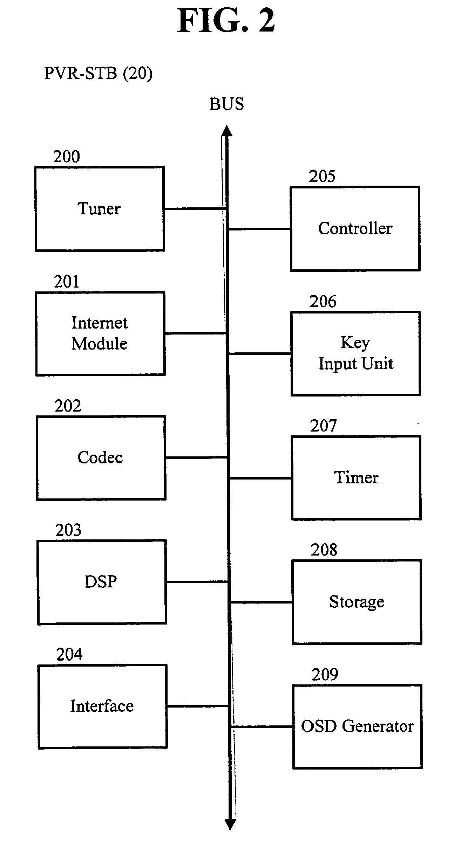

As shown in FIG. 2, the broadcast recording device 20 may include the entirety or a portion of a tuner 200, an Internet module 201, a codec 202, a digital signal processor (DSP) 203, an interface 204, a controller 205, a key input unit 206, a timer 207, a storage 208, and an on-screen display (OSD) generator 209. The respective elements transmit and receive signals via bus lines.

The controller 205 controls the OSD generator 209 to display EPG information, i.e., broadcasts program guide information, through a user interface-available OSD according to a user request.

When the user selects a desired broadcast program based on the EPG information and sets reserved recording for the broadcast program, the controller 205 stores a start time and an end time of the broadcast program, a broadcast channel, the title of the broadcast program, and the like, as reserved recording information.

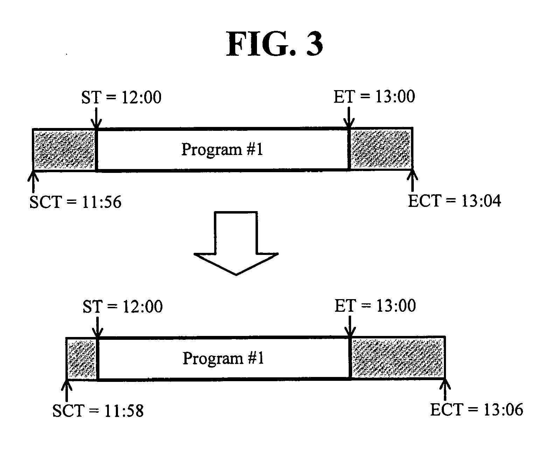

With reference to FIG. 3, for example, when the controller 205 sets a first broadcast program (Program #1) to be broadcast from 12:00 to 13:00 as reserved recording information, the controller also additionally sets start complementary time (SCT) and/or an end complementary time (ECT) according to a predetermined additional start record duration and/or an additional end record duration.

For example, if the additional start record duration and the additional end record duration are set as four minutes, respectively, the reserved recording operation is performed on the first broadcast program from 11:56 to 13:04.

The additional start record duration and the additional end record duration may be set to be different in consideration of broadcast program transmission characteristics. In this case, generally, broadcast programs are rather frequently delayed to be broadcast than be broadcast earlier to a scheduled time, so in consideration of this, it is preferred to set the additional end record duration is lengthier than the additional start record duration.

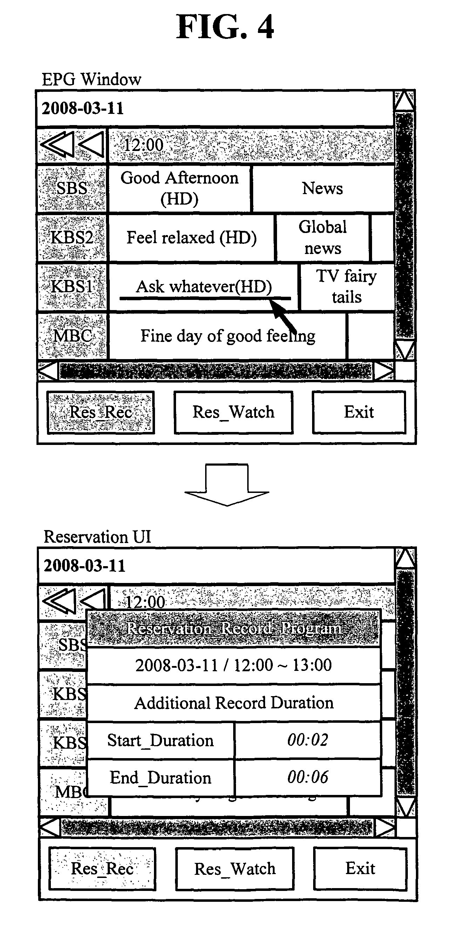

When the reserved recording is set through the EPG information as shown in FIG. 4, the controller 205 controls the OSD generator 209 to output a menu window for setting a complementary recording time.

When the user sets the additional start record duration and the additional end recording time as two minutes and six minutes, the controller 205 provides control such that a reserved recording operation with respect to the first broadcast program (Program #1) is performed from 11:58 to 13:06, allowing for the substantial complementary recording just in case a broadcast is delayed.

Meanwhile, there is a possibility that the ECT of a first broadcast program and the SCT of a second broadcast program may overlap in case of reserved recordings with respect to the first broadcast program (Program #1) and the second broadcast program (Program #2). This is because the broadcast recording device schedules the reserved time with respect to program recording based on start times and end times of programs, rather than based on SCTs and ECTs. In this case, the controller 205 optimizes the switching time from the first broadcast program recording operation to the second broadcast program recording operation in consideration of the characteristics of the broadcast program transmission.

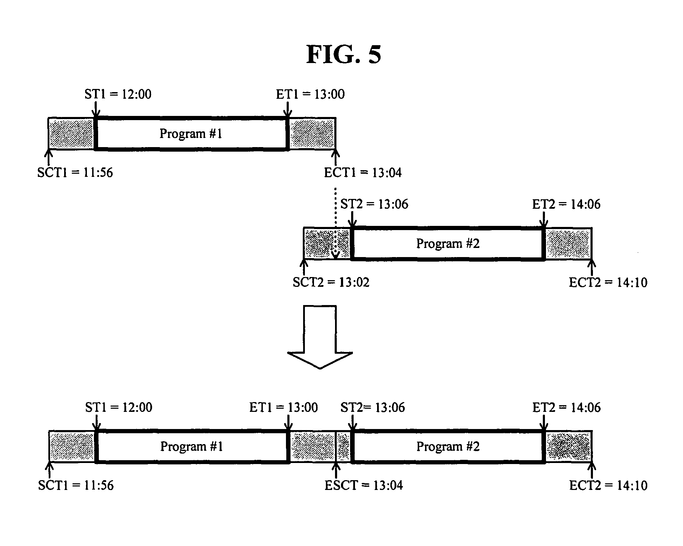

With reference to FIG. 5, a start time ST1 and an end time ET1 of the first broadcast program (Program #1) may be set as 12:00 and 13:00, and the SCT1 and the ECT1 may be set as 11:56 and 13:04, respectively. Also, a start time ST2 and an end time ET2 of the second broadcast program (Program #2) may be set as 13:06 and 14:06, respectively, and the SCT2 and the ECT2 may be set as 13:02 and 14:10, respectively.

In this case, the controller 205 discriminates that the ECT1 of the first broadcast program and the SCT2 of the second broadcast program overlap for the time duration from 13:02 to 13:04.

In a first exemplary embodiment of the present invention, the controller 205 prioritizes the ECT 1 of the first broadcast program in consideration of the characteristics of a broadcast program transmission that a broadcast program tends to be delayed to be broadcast rather than being broadcast earlier than a scheduled time.

Accordingly, the controller 205 switches to the recording operation of the second broadcast program when the ECT1 of the first broadcast program lapses to perform the reserved recording operation with respect to the first broadcast program from 11:56 to 13:04 and then the reserved recording operation with respect to the second broadcast program from 13:04 to 14:10.

In a second exemplary embodiment of the present invention, the controller 205, weighting the ECT1 of the first broadcast program among the ECT1 of the first broadcast program and the SCT2 of the second broadcast program, may adjust the ECT1 of the first broadcast program and/or the SCT2 of the second broadcast program. Namely, the controller 205 may adjust the switching time from recording of the first broadcasting program to recording of the second broadcast program.

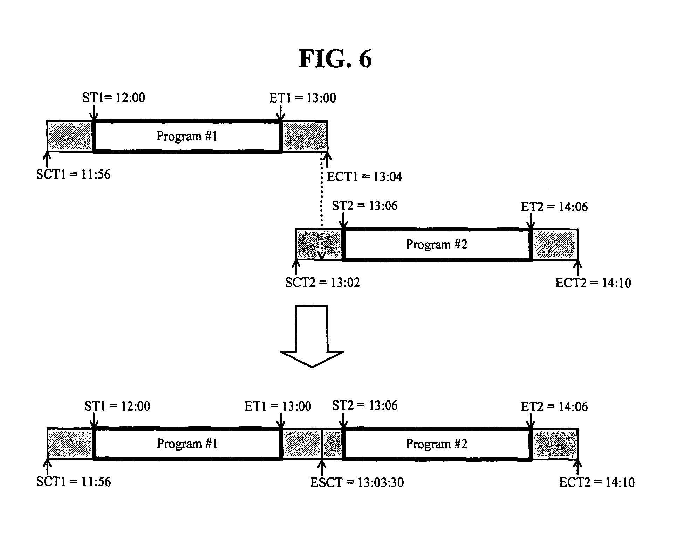

For example, as shown in FIG. 6, the controller 205 gives weight of 3:1 to the ECT1 of the first broadcast program and the SCT2 of the second broadcast program such that two minutes during which the ECT1 of the first broadcast program and the SCT2 of the second broadcast program overlap may be distributedly allocated as one minute and 30 seconds and 30 seconds, respectively, to the ECT 1 and the SCT2. Namely, the switching time may be adjusted to be closer to the ECT1 of the first broadcast program than to the SCT2 of the second broadcast program.

Accordingly, the controller 205 first performs the reserved recording operation with respect to the first broadcast program from 11:56 to 13:03:30, and then performs the reserved recording operation with respect to the second broadcast program from 13:03:30 to 14:10. In this case, the weight may be set in a certain ratio by the user or may be varied depending on the type of the broadcast program, particularly, depending on the type of the first broadcast program.

For example, if the type of the first broadcast program is a sports broadcasting program likely to be prolonged from a scheduled end time and the type of the second broadcast program is a general movie broadcasting program, the weight may be variably changed from 3:1 to 4:1 or the like.

Meanwhile, in case of reserved recordings with respect to the first broadcast program (Program #1) and the second broadcast program (Program #2), if the ECT1 of the first broadcast program and the start time ST2 of the second broadcast program overlap, the controller 205 provides control to switch from the first broadcast program recording operation to the second broadcast program recording operation before the start time ST2 of the second broadcast program arrives.

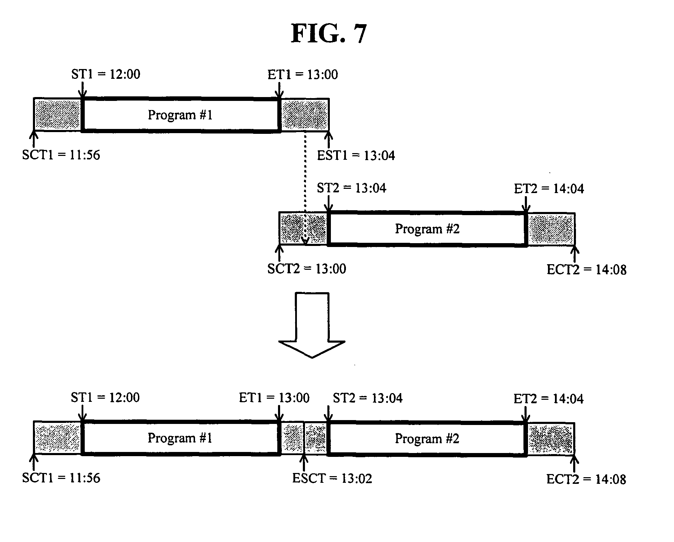

For example, as shown in FIG. 7, the start time ST1 and the end time ET1 of the first broadcast program (Program #1) may be set as 12:00 and 13:00, and the SCT1 and the ECT1 may be set as 11:56 and 13:04, respectively. Also, the start time ST2 and the end time ET2 of the second broadcast program (Program #2) may be set as 13:04 and 14:04, respectively, and the SCT2 and the ECT2 may be set as 13:00 and 14:08, respectively.

In this case, the controller 205 discriminates that the ECT1 of the first broadcast program and the start time ST2 of the second broadcast program overlap at 13:04.

In a third exemplary embodiment of the present invention, the controller 205 may give the same weight to the ECT1 of the first broadcast program and the SCT2 of the second broadcast program in consideration of the end time ET1 of the first broadcast program and the start time ST2 of the second broadcast program.

Accordingly, the controller 205 performs the reserved recording operation with respect to the first broadcast program from 11:56 to 13:02, and then performs the reserved recording operation with respect to the second broadcast program from 13:02 to 14:08.

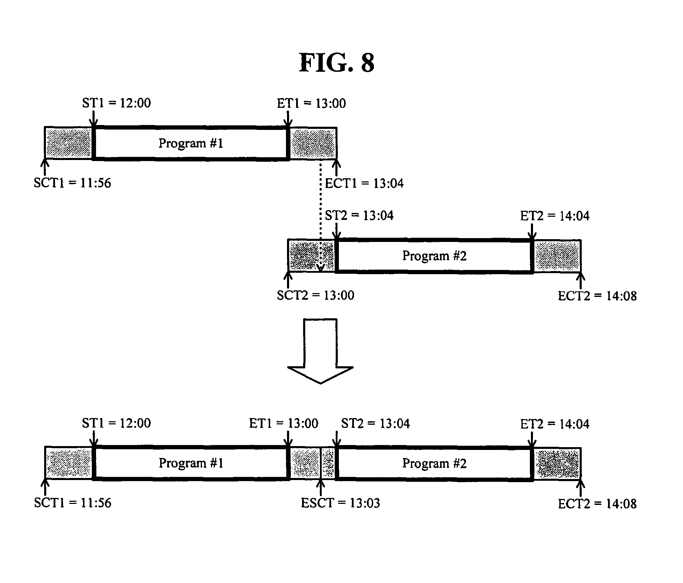

In a fourth exemplary embodiment, as shown in FIG. 8, in consideration of the separation time (i.e., the duration) between the end time ET1 of the first broadcast program and the start time ST2 of the second broadcast program and also the characteristics of the broadcast program transmission that a broadcast program tends to be delayed to be broadcast rather than being broadcast earlier than a schedule time, the controller 205 may adjust the ECT1 of the first broadcast program and the SCT2 of the second broadcast program such that the switching time from the recording of the first broadcast program to the recording of the second broadcast program is closer to the start time of the second broadcast program.

Accordingly, the controller 205 performs the reserved recording operation with respect to the first broadcast program form 11:56 to 13:03 and then performs the reserved recording operation with respect to the second broadcast program from 13:03 to 14:08, thereby optimizing the switching time from the first broadcast program recording operation to the second broadcast program recording operation.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method of performing reserved recording for a broadcast program, the method comprising:
additionally setting a start complementary time (SCT) and/or an end complementary time (ECT) before a start time and after an end time of at least one of broadcast programs in setting reserved recording for the broadcast programs; and
if the SCT of a second broadcast program or a start time of the second broadcast program is ahead of the ECT of a first broadcast program, changing a switching time for switching from recording of the first broadcast program to recording of the second broadcast program.

2. The method of claim 1, wherein an interval between the ECT and the end time is lengthier than that between the SCT and the start time.

3. The method of claim 1, wherein the switching time is changed by changing at least one of the ECT of the first broadcast program and the SCT of the second broadcast program.

4. The method of claim 3, wherein if the ECT of the first broadcast program is behind the SCT of the second broadcast program and ahead of the start time of the second broadcast program, the switching time is determined as a certain time between the SCT of the second broadcast program and the ECT of the first broadcast program.

5. The method of claim 4, wherein the switching time is determined as the ECT of the first broadcast program.

6. The method of claim 4, wherein the switching time is determined as a time closer to the ECT of the first broadcast program than to the SCT of the second broadcast program.

7. The method of claim 4, wherein the position of the switching time is determined to be varied according to the type of the first broadcast program.

8. The method of claim 3, wherein if the ECT of the first broadcast program is the same as or behind the start time of the second broadcast program, the switching time is determined as a certain time between an end time of the first broadcast program and a start time of the second broadcast program.

9. The method of claim 8, wherein the switching time is determined as an intermediate time between the end time of the first broadcast program and the start time of the second broadcast program.

10. The method of claim 8, wherein the switching time is determined as a time closer to the start time of the second broadcast program than to the end time of the first broadcast program.

11. A broadcast recording device comprising:
a receiving unit configured to receive a broadcast program;
a recording unit configured to record the broadcast program in a recording medium; and
a controller configured to control the receiving unit and the recording unit to perform reserved recording for a broadcast program,
wherein the controller is configured to additionally set a start complementary time (SCT) and/or an end complementary time (ECT) before a start time and after an end time of at least one of broadcast programs in setting reserved recording for the broadcast programs, and if the SCT of a second broadcast program or a start time of the second broadcast program is ahead of the ECT of a first broadcast program, the controller is configured to change a switching time for switching from recording of the first broadcast program to recording of the second broadcast program.

12. The device of claim 11, wherein if the ECT of the first broadcast program is behind the SCT of the second broadcast program and ahead of the start time of the second broadcast program, the controller is configured to determine the switching time as a certain time between the SCT of the second broadcast program and the ECT of the first broadcast program.

13. The device of claim 12, wherein the controller is configured to determine the switching time as a time closer to the ECT of the first broadcast program than to the SCT of the second broadcast program.

14. The device of claim 12, wherein the controller is configured to variably determine the position of the switching time according to the type of the first broadcast program.

15. The device of claim 11, wherein if the ECT of the first broadcast program is the same as or behind the start time of the second broadcast program, the controller is configured to determine the switching time as a certain time between an end time of the first broadcast program and a start time of the second broadcast program.

16. The device of claim 15, wherein the controller is configured to determine the switching time as a time closer to the start time of the second broadcast program than to the end time of the first broadcast program.
